# EUROPEAN PATENT SPECIFICATION

(11) **EP 0 624 747 B1**
(45) Date of publication and mention of the grant of the patent: **10.09.1997**
(21) Application number: 93850029.5
(22) Date of filing: 11.02.1993
(51) Int. Cl.: F16L 11/20, F16L 39/00, E04F 17/02

(54) **Flexible tube**
Schlauch
Tuyau flexible

(30) Priority: 11.02.1992 SE 9200407
(43) Date of publication of application: 17.11.1994
(73) Proprietor: Johnson, Arvid, S-468 00 Vargön (SE)
(72) Inventor: Johnson, Arvid, S-468 00 Vargön (SE)
(74) Representative: Arwidi, Bengt Dr.

(56) References cited:
- CH-A- 436 877
- FR-A- 1 134 305
- FR-A- 2 566 094
- US-A- 2 978 261

## Description

The present invention is for a flexible tube made from thin-walled goods. The invention primarily is for an inset tube for chimney flues and the tubes are then generally made from a suitable quality of steel.

Deflective or flexible tubes have been used both as insets for existing chimney flues and in the manufacture of chimneys. Hereby the inner surface of the chimney flue is formed by the tube and its inside is in direct contact with the smoke. The inside of the tubes is therefore exposed both to the influence of the temperature of the gases and to the influence of chemical compounds, e.g. components which are condensed from the smoke. There is also formed on the inside of the tubes a layer which shall be removed by the sweeping.

In order to obtain flexibility of the tubes these are either made by spirally winding bands which are connected by folding or from a required number of sections which are relatively short in the longitudinal direction of the tube and which in a suitable way are attached to each other. In order to obtain the necessary stiffness of the sections of the tubes, their walls are often corrugated. The inside of the tubes are therefore not smooth but corrugations and connections cause an uneven surface with slits and pockets which cause problems by the sweeping.

IN CH-436 877 there are disclosed tubes which comprise a number of identical sections which are inserted one into another to form a tube of desired length. The tubes disclosed have no flexibility and there are no connecting means, adjacent sections are simply inserted one into another. Each tube section has two parts which preferrably are of equal length. The purpose of this is said to be to obtain stronger walls. There is no mentioning of smooth inner walls.

US-A-2 978 261 discloses a double-wall vent made of a plurality of sections fitted together.

The present invention is for a flexible tube which has an essentially smooth inner surface. The tube comprises in its longitudinal direction several identical sections. Each section can be said to have in its longitudinal direction two parts, the first of which has a smooth inner surface. Also the first part has an outer dimension which is close to the inner dimension of the second part, whereby the first part of one section can be inserted into a second part of an adjacent section. The parts have essentially the same length and the smooth inner surfaces of the first parts will therefore be the inside of the tubes. Conventionally insets for chimney flues are made with a circular cross section, but tubes according to the invention can also be made having e.g. elliptic or other suitable cross section, whereby the inner space of an existing chimney flue can be used in a more efficient way.

For the assembly of the sections to form a tube the walls of the tube sections are bent so that between the first and the second part of each section there is an L-shaped projection. This is designed having a short shank directed outwards from the tube and having a longer shank in the the longitudinal direction of the tube from the first part of the section towards the second part thereof. In the extreme end of the second part the end of the tube section has a second L-shaped projection which is similar to the first projection but of somewhat larger size so that the second projection grips around the first one in such a way that some movements are possible. Preferably the first part of each section extends so far into the second part of the adjacent section that said first part extends in under that shank of the L-shaped projection which is parallel with the tube but not to its other shank. Hereby is achieved that the tube has a double wall along its entire length. The outer diameter of the first part shall be somewhat smaller than the inner diameter of the second part or corresponding dimensions so that there is an airfilled slot between the two parts of the wall along the whole length of the tube.

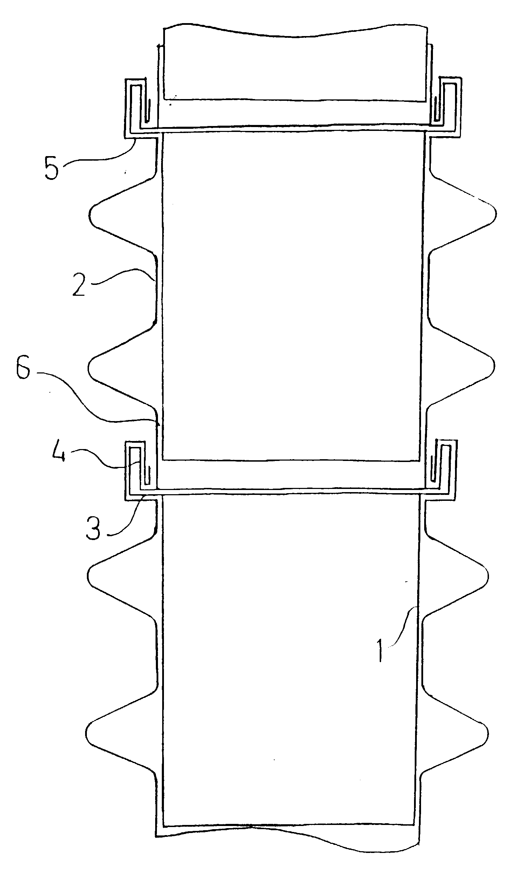

A preferred embodiment of the invention is shown in the figure which shows a cross-section of the length of a tube according to the invention. The figure shows the whole length of one tube section and parts of adjacent sections. Each section comprises a first part 1 having a smooth inside and a second part 2 with two circumferential corrugations and bendings as required for the connection of the sections. Between the two parts of each section the tube is bent to form an L-shaped projection having a shank 3 which projects at right angle from the tube and another shank 4 which is parallel with the tube and projects forwards to the other part of the section. Said second part ends at each section with a second L-shaped projection 5 which is similar to the first projection and encloses this. The first part of a tube section which forms the inner wall of the tube ends approximately at the middle of an L-shaped projection. The L-shaped projections enclose each other with a certain tolerance so that the tube sections are movable in relation to each other. Between the outer and the inner wall of the tube there is a slot 6.

## Claims

1. Flexible tube having an outer layer and an inner, layer having a smooth inner surface, and comprising several identical sections which are connected to each other to form the tube, wherein each section in its longitudinal direction has two parts, of which the first part has a smooth inner surface and outer dimensions which are close to the inner dimensions of the second part of the tube, so that the first part of one section can be inserted into the second part of an adjacent section characterized therein that each second part has corrugations, which form the outer layer (2) enclosing the first part of an adjacent section, (1) and that each section at one of its ends and being part of the second part has a first projection (5) wich encloses a corresponding second projection (3, 4) at the adjacent section with some movement therebetween for flexibly holding the sections together.

2. Flexible tube according to claim 1, characterized therein that the first part (1) of each section extends so far into an adjacent section that said first part extends in to the level of the second projection (4), which is parallel with the tube, but not into the full length of the second projection.

## Patentansprüche

1. Biegsames Rohr mit einer äußeren und einer inneren Schicht, die eine glatte Oberfläche hat, und das aus mehreren, identischen Abschnitten umfaßt, die zur Bildung des Rohres miteinander verbunden sind, wobei jeder Abschnitt in seiner Längsrichtung zwei Teile hat, von denen das erste Teil eine glatte, innere Oberfläche hat und äußere Abmessungen, die den inneren Abmessungen des zweiten Teils des Rohres angenähert sind, so daß das erste Teil eines Abschnittes in das zweite Teil eines angrenzenden Abschnittes hineingeführt werden kann, dadurch gekennzeichnet, daß jedes zweite Teil Wellen oder Riffeln hat, die die äußere Schicht (2), das erste Teil eines angrenzenden Abschnittes (1) einschließend, bilden, und daß jeder Abschnitt an einem seiner Enden einen ersten Vorsprung (5) hat, der ein Teil eines zweiten Teils ist, und der einen zweiten entsprechenden Vorsprung (3, 4) am angrenzenden Abschnitt mit etwas Bewegung dazwischen zum beweglichen Halten der Abschnitte aneinander einschließt.

2. Biegsames Rohr nach Anspruch 1, dadurch gekennzeichnet, daß das erste Teil (1) jedes Abschnittes so weit in einen angrenzenden Abschnitt hineinragt, daß das genannte erste Teil sich bis zur Höhe des zweiten Vorsprungs (4), der parallel zu dem Rohr läuft, aber nicht in die ganze Länge des zweiten Vorsprungs streckt.

## Revendications

1. Tuyau flexible comportant une couche extérieure et une couche intérieure ayant une surface intérieure lisse, et comportant plusieurs sections identiques qui sont reliées l'une à l'autre pour former le tuyau, chaque section, dans sa direction longitudinale, comportant deux parties, dont la première partie présente une surface intérieure lisse et des dimensions extérieures qui sont voisines des dimensions intérieures de la seconde partie du tube, de manière que la première partie d'une section peut être introduite dans la seconde partie d'une section adjacente, caractérisé en ce que chaque seconde partie comporte des ondulations qui forment la couche extérieure (2) renfermant la première partie (1) d'une section adjacente, et que chaque section, à l'une de ses extrémités faisant partie de la seconde partie, comporte une première saillie (5) qui renferme une seconde saillie correspondante (3, 4) de la section adjacente, avec quelque mouvement entre elles, pour tenir les sections ensemble de manière souple.

2. Tuyau flexible selon la revendication 1, caractérisé en ce que la première partie (1) de chaque section s'étend dans une section adjacente sur une longueur telle que ladite première partie s'étend jusqu'au niveau de la seconde saillie (4), qui est parallèle au tuyau, mais pas sur toute la longueur de la seconde saillie.
